# FASCICULE DE BREVET EUROPEEN

(11) **EP 0 488 895 B1**
(45) Date de publication et mention de la délivrance du brevet: **20.09.1995**
(21) Numéro de dépôt: 91403224.8
(22) Date de dépôt: 28.11.1991
(51) Int. Cl.: H02G 15/18, H02G 15/013

(54) **Dispositif de protection d'un raccordement de câbles**
Schutzvorrichtung für eine Kabelverbindung
Protective device for a cable junction

(30) Priorité: 29.11.1990 FR 9014940
(43) Date de publication de la demande: 03.06.1992
(73) Titulaire: SOCIETE INDUSTRIELLE DE LIAISONS ELECTRIQUES (SILEC), F-75008 Paris (FR)
(72) Inventeur: Arette Hourquet, Damien, F-77130 Cannes Ecluse (FR)
(74) Mandataire: Fruchard, Guy

(56) Documents cités:
- EP-A- 0 038 659
- EP-A- 0 048 147
- EP-A- 0 059 332
- EP-A- 0 106 446
- EP-A- 0 117 762
- DE-A- 1 942 463

## Description

La présente invention concerne un dispositif de protection d'un raccordement de câbles, qu'il s'agisse de câbles à conducteurs métalliques ou de câbles à fibres optiques. La protection assure simultanément la résistance mécanique du raccordement ainsi que son étanchéité.

On connaît du document DE 1942463 un dispositif pour la protection d'un raccordement de câble comportant un segment de bande en matière thermofusible et un organe de liaison formé par un ruban thermofusible auquel est associé une résistance électrique allongée.

Lors de la mise en place du dispositif il est nécessaire d'assurer un collage du ruban de liaison thermofusible sur les bords en regard du segment de bande et de maintenir le ruban de liaison en contact avec le segment de bande au moyen d'une bande en caoutchouc. Ceci entraîne des manipulations difficilement compatibles avec les conditions habituelles de mise en place sur un chantier.

Un but de l'invention est de proposer un dispositif de protection pouvant être aisément mis en place sur un raccordement existant ou pour reprotéger un raccordement sur lequel on est intervenu de façon partielle.

En vue de la réalisation de ce but, on prévoit selon l'invention un dispositif pour la protection d'un raccordement de câble par mise en place d'un organe tubulaire déformable à chaud comportant un segment de bande de matière thermofusible, un organe de liaison des bords du segment de bande, et au moins une résistance électrique allongée disposée pour s'étendre à proximité d'au moins un bord du segment de bande, caractérisé en ce que l'organe de liaison comporte au moins une rainure ou une gorge disposée pour assurer un maintien d'au moins un bord du segment de bande.

Selon un mode de réalisation de l'invention, l'organe de liaison des bords du segment de bande comporte une réglette dans laquelle une résistance électrique s'étend longitudinalement et débouche au moins à une extrémité de la réglette.

Selon un autre mode de réalisation de l'invention, l'organe de liaison comporte des lèvres de maintien solidaires d'un bord du segment de bande et s'étendant en saillie le long de ce bord pour délimiter une gorge d'engagement d'un bord opposé du segment de bande.

D'autres avantages de l'invention apparaîtront à la lecture de la description qui suit de plusieurs exemples particuliers non limitatifs de l'invention en liaison avec les dessins ci-joints parmi lesquels :
- la figure 1 est une vue en perspective schématique d'un dispositif de protection selon l'art antérieur,
- la figure 2 est une vue en perspective schématique partielle d'un premier mode de réalisation de l'invention,
- la figure 3 est une vue en coupe agrandie selon la ligne III-III de la figure 2,
- la figure 4 est une vue en perspective partiellement en coupe d'une variante de réalisation de l'organe de liaison du dispositif de la figure 2,
- la figure 5 est une vue en coupe transversale d'une autre variante de réalisation de l'organe de liaison du dispositif de protection selon la figure 2,
- la figure 6 est une vue en coupe transversale d'un second mode de réalisation du dispositif de protection selon l'invention,
- la figure 7 est une vue en coupe transversale partielle d'une variante de réalisation du dispositif de protection de la figure 6.

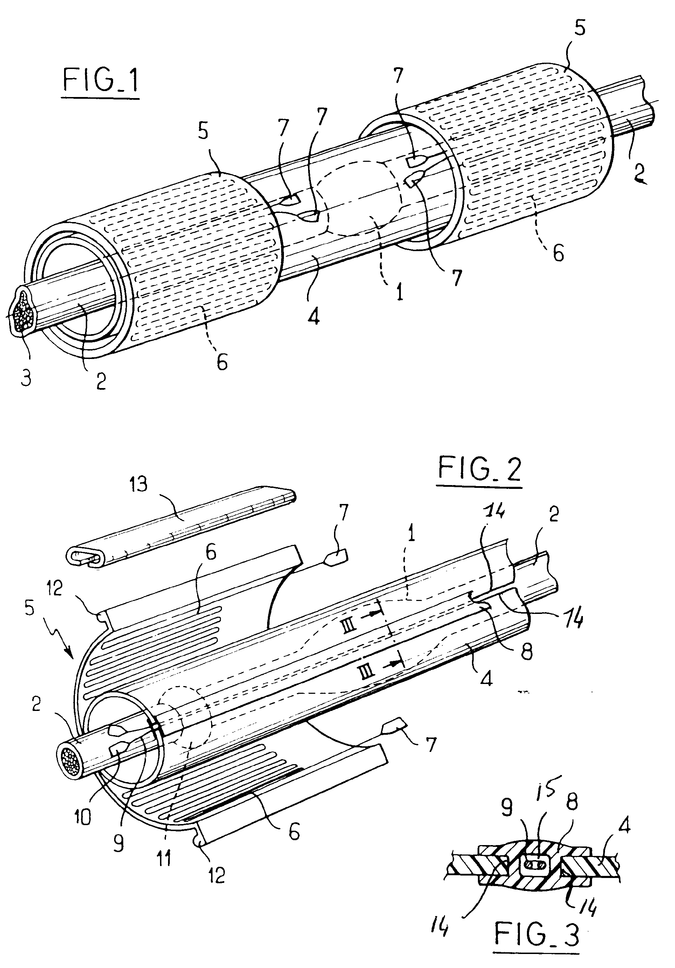

En référence à la figure 1, le dispositif illustré est destiné à assurer la protection d'un raccordement 1 entre deux câbles 2, qu'il s'agisse de câbles à conducteurs métalliques ou à fibres optiques. Les câbles 2 sont recouverts d'une gaine extérieure 3 qui est généralement en polyéthylène ou en matériau analogue. Le dispositif de protection connu comporte un organe tubulaire cylindrique 4 réalisé en matière déformable à chaud, par exemple du polyéthylène ou une composition réticulable à base d'élastomère et de plastomère telles que décrites en particulier dans le document FR-A-2.345.482. L'organe tubulaire 4 a une longueur suffisante pour recouvrir le raccordement 1 et s'étendre de part et d'autre de ce raccordement à l'aplomb de la gaine 3 des câbles 2.

Un manchon thermorétractable 5 recouvre les parties extrêmes de l'organe tubulaire 4. Dans l'exemple illustré, les manchons thermorétractables 5 sont des manchons cylindriques sous forme expansée de sorte qu'une augmentation de température provoque une diminution du diamètre de ces manchons.

Une résistance en nappe 6 est disposée à l'intérieur des manchons thermorétractables 5. La résistance électrique 6 est par exemple un fil métallique fixé en zigzag sur une feuille qui est ensuite collée à l'intérieur d'un manchon thermorétractable 5. Chaque résistance électrique 6 est équipée de cosses de raccordement 7 accessibles à l'extérieur du manchon thermorétractable 5 et permettant de raccorder la résistance électrique 6 à une source d'électricité, par exemple un petit groupe électrogène.

La mise en oeuvre de ce dispositif de protection se fait de la façon suivante : préalablement au raccordement, l'organe tubulaire 4 et les manchons de rétraction 5 sont enfilés sur l'un des câbles à raccorder, le raccordement est effectué, puis l'organe tubulaire 4 et les manchons de rétraction 5 sont ramenés vers le raccordement pour s'étendre de part et d'autre de celui-ci comme illustré sur la figure 1. Les résistances électriques 6 sont alors raccordées à une source d'électricité, ce qui permet le chauffage des manchons 5 et des extrémités de l'organe tubulaire 4 par effet Joule. Sous l'effet de cet échauffement, le tube 4 fond localement et les manchons 5 se rétractent appliquant ainsi l'organe tubulaire 4 de façon étanche sur les câbles 2. On remarque que le dispositif doit être mis en place avant la réalisation du raccordement, ce qui présente un inconvénient notable lorsque l'on souhaite simplement protéger un raccordement existant ou reprotéger un raccordement sur lequel on est intervenu de façon partielle.

La figure 2 illustre un premier mode de réalisation de l'invention pour lequel une extrémité seulement du dispositif de protection a été représenté. Selon ce mode de réalisation, l'organe tubulaire 4 est réalisé à partir d'un segment de bande de matière thermofusible, de préférence un tube stabilisé thermiquement et découpé longitudinalement de façon que les bords 14 de la fente longitudinale soient rappelés l'un vers l'autre de façon élastique pour être reliés par une réglette en H 8 formant un organe de liaison des bords du segment de bande. Dans le mode de réalisation des figures 2 et 3, la réglette 8 comporte un canal central 15 dans lequel est disposée une résistance électrique 9 formée d'un fil métallique replié en épingle à cheveux et s'étendant longitudinalement dans le canal 15. La résistance 9 débouche à une extrémité de la réglette 8 et comporte des cosses de raccordement 10. Le segment de bande flexible et la réglette sont par exemple en polyéthylène. Dans ce cas, on dispose un joint d'étanchéité 11 sur chaque câble 2 avant la mise en place de l'organe tubulaire 4. Le joint d'étanchéité 11 peut être supprimé dans le cas où on utilise un segment de bande réalisé en composition d'élastomère et de polymère décrite dans le document FR-A-2.345.482 en liaison avec des câbles comportant une gaine externe en polyéthylène car les compositions décrites dans ce document se soudent intimement à chaud avec le polyéthylène. La mise en place de l'organe tubulaire 4 est effectuée en disposant le segment de bande autour des câbles 2 et en assurant la liaison des bords longitudinaux au moyen de la réglette 8. Après la mise en place de cette réglette, les cosses 10 sont raccordées à une source d'électricité pour assurer une fusion de la réglette entre les bords 14 du segment de bande et réaliser ainsi une soudure étanche des bords 14 du segment de bande formant l'organe tubulaire 4.

De préférence, pendant la réalisation de la soudure par fusion partielle de la réglette 8 et des bords adjacents du segment de bande, les bords 14 du segment de bande 4 sont maintenus légèrement en appui contre les parties en fusion de la réglette 8. Cette mise en appui des bords 14 peut être obtenue par l'élasticité du segment de bande 4 lorsque celui-ci est réalisé par découpe longitudinale d'un tube stabilisé comme indiqué ci-dessus, ou en disposant un organe élastique autour du segment de bande 4 pendant la réalisation de la soudure, ou encore en maintenant les bords du segment de bande légèrement en compression à l'intérieur des rainures de la réglette comme il sera indiqué ci-dessous à propos d'un second mode de réalisation de l'invention.

Par ailleurs, l'organe de rétraction 5 comporte de façon connue en soi un segment de bande thermorétractable repliable garni sur sa face interne avec la résistance électrique 6 et comportant sur ses bords longitudinaux des nervures de liaison 12 qui, après une mise bord à bord des côtés du segment de bande thermorétractable, sont associées par une réglette en C 13. Une fois mis sous forme tubulaire, le manchon thermorétractable 5 est rétracté en branchant la résistance 6 à une source d'électricité afin d'appliquer l'organe tubulaire 4 sur les câbles 2 comme précédemment.

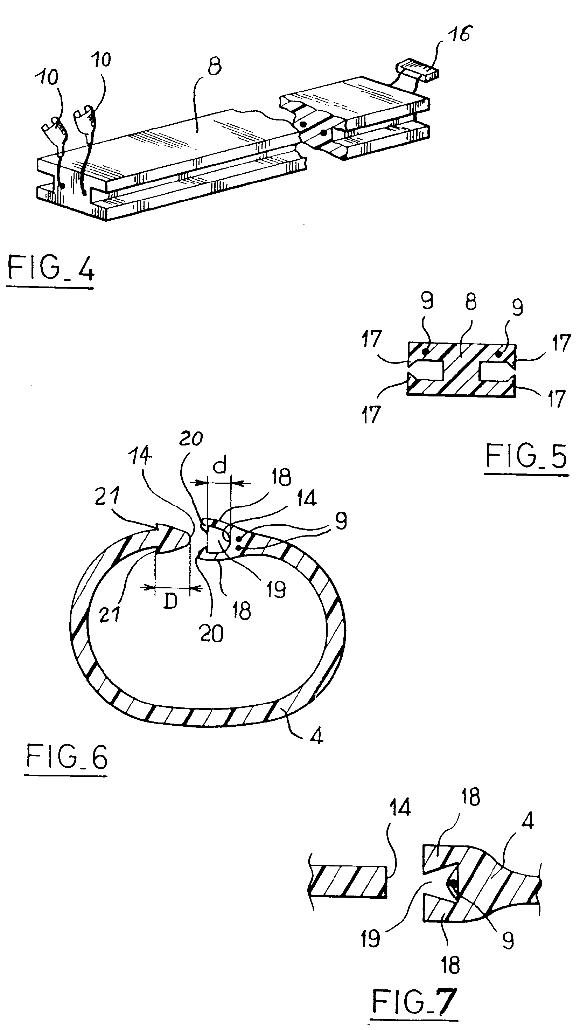

La figure 4 illustre une variante de réalisation selon laquelle la réglette 8 comporte deux résistances électriques 9 noyées dans la masse de la réglette à proximité du fond des gorges des rainures de la réglette. A une extrémité de la réglette, les résistances électriques 9 sont associées à des cosses 10 électriquement séparées tandis qu'à l'extrémité opposée de la réglette 8, les résistances électriques 9 sont reliées électriquement par une pièce conductrice 16. Ce mode de réalisation peut être réalisé de façon particulièrement avantageuse en extrudant la réglette 8 de façon continue autour de fils résistants 9 disposés parallèlement l'un à l'autre. La réglette de très grande longueur ainsi obtenue est ensuite sectionnée selon des longueurs correspondant aux organes tubulaires que l'on souhaite réaliser et les fils résistants 9 sont dénudés aux extrémités de la réglette pour permettre une mise en place des cosses 10 à une extrémité de la réglette et du pontet de liaison 16 à l'extrémité opposée. On peut également réaliser la réglette en extrudant simplement une matière thermofusible et thermosoudable telle que du polyéthylène selon une bande ayant une section en H puis en collant une résistance électrique dans le fond des rainures de la réglette ainsi formée.

La figure 5 illustre une autre variante de réalisation dans laquelle des fils chauffants 9 sont disposés sur un côté des rainures de la réglette 8 de sorte qu'après réalisation d'une soudure par passage d'un courant électrique dans les fils chauffants 9 l'étanchéité de l'élément tubulaire 4 est obtenue non plus en associant les bords 14 du segment de bande 4 avec le fond des rainures de la réglette mais en les associant avec le flanc de la réglette.

Dans ce mode de réalisation, la réglette comporte en outre des nervures de maintien 17 s'étendant le long des bords longitudinaux de la réglette 8 et tournées vers l'intérieur des gorges de la réglette. Lorsque les bords 14 du segment de bande 4 sont introduits dans les rainures de la réglette, ces bords 14 sont ainsi maintenus en appui dans les rainures de la réglette pendant la réalisation de la soudure.

La figure 6 illustre un second mode de réalisation de l'invention dans lequel l'organe de liaison des bords du segment de bande est formé par des lèvres de maintien 18 solidaires d'un bord 14 du segment de bande 4 et s'étendant en saillie le long de ce bord pour délimiter une gorge 19 d'engagement du bord opposé du segment de bande 4. De préférence, pour maintenir le bord du segment de bande 4 entre les lèvres de maintien 18, ces lèvres de maintien comportent des nervures de maintien 20 tournées vers l'intérieur de la gorge et le bord du segment de bande opposé aux lèvres de maintien 18 comporte des nervures de verrouillage 21 ayant un profil complémentaire des nervures de maintien 20 et en retrait par rapport au bord 14 adjacent du segment de bande.

Les nervures de maintien 20 sont de préférence à une distance d du fond de la gorge 19 inférieure à la distance D des nervures de verrouillage 21 par rapport aux bords 14 adjacents. Ainsi, lors de l'introduction du bord équipé des nervures 21 dans la gorge 19, les bords 14 sont mis en appui pour que les nervures de verrouillage 21 s'enclenchent dans les nervures de maintien 20 et les bords 14 sont ainsi maintenus en pression l'un contre l'autre pendant la réalisation de la soudure réalisée comme dans les cas précédents au moyen d'un ou plusieurs fils chauffants disposés le long de la gorge 19 de façon adjacente au fond de celle-ci.

La figure 7 illustre une variante de réalisation du second mode de réalisation de l'invention dans lequel les lèvres 18 ont des parois internes rentrantes délimitant une gorge 19 ayant une section en forme de queue d'aronde. Une résistance électrique formée d'un fil chauffant unique 9 est disposée dans le fond de la gorge 19 et est fixée par collage. Dans ce cas, les cosses 10 permettant l'alimentation de la résistance électrique seront bien entendu disposées chacune à une extrémité du fil chauffant 9.

Bien entendu l'invention n'est pas limitée aux modes de réalisation décrits et on peut y apporter des variantes de réalisation sans sortir du cadre de l'invention. En particulier, bien que le dispositif selon l'invention ait été illustré en utilisant pour réaliser le segment de bande 4 une matière simplement thermofusible qui est ensuite appliquée sur le raccordement de câbles en utilisant un organe de rétraction 5 indépendant de l'organe tubulaire, l'invention peut être réalisée en utilisant un segment de bande en matière thermorétractable, par exemple en découpant longitudinalement un tube thermorétractable dans sa position expansée. Dans ce cas le matériau thermorétractable choisi devra bien entendu être également un matériau thermosoudable et on utilisera utilisera utilement à cet effet une composition réticulable à base d'élastomère et de plastomère telles que décrites dans le document FR-A-2 345 482 en liaison avec une réglette de même nature ou simplement en polyéthylène.

Bien que des nervures de verrouillage 21 aient été illustrées seulement à propos du mode de réalisation de la figure 6, des nervures analogues peuvent être prévues dans les autres modes de réalisation.

## Revendications

1. Dispositif pour la protection d'un raccordement de câble par mise en place d'un organe tubulaire déformable à chaud comportant un segment de bande de matière thermofusible (4), un organe de liaison (8, 18) des bords du segment de bande, et au moins une résistance électrique allongée (9) disposée pour s'étendre à proximité d'au moins un bord (14) du segment de bande, caractérisé en ce que l'organe de liaison comporte au moins une rainure ou une gorge (19) disposée pour assurer un maintien d'au moins un bord (14) du segment de bande.

2. Dispositif de protection selon la revendication 1, caractérisé en ce que l'organe de liaison des bords du segment de bande comporte une réglette (8) dans laquelle une résistance électrique (9) s'étend longitudinalement et débouche à au moins une extrémité de la réglette.

3. Dispositif de protection selon la revendication 2, caractérisé en ce que la réglette (8) a une section en H et comporte des nervures de maintien (17) tournées vers l'intérieur des rainures.

4. Dispositif de protection selon la revendication 1, caractérisé en ce que l'organe de liaison comporte des lèvres de maintien (18) solidaires d'un bord (14) du segment de bande (4) et s'étendant en saillie le long de ce bord pour délimiter une gorge (19) d'engagement d'un bord opposé du segment de bande.

5. Dispositif de protection selon la revendication 4, caractérisé en ce que la résistance électrique (9) comporte au moins un fil électrique adjacent au fond de la gorge (19).

6. Dispositif de protection selon la revendication 4 ou la revendication 5, caractérisé en ce que les lèvres (18) comportent des nervures de maintien (20) tournées vers l'intérieur de la gorge (19).

7. Dispositif de protection selon la revendication 6, caractérisé en ce que le bord du segment de bande opposé aux nervures de maintien (20) comporte des nervures de verrouillage (21) ayant un profil complémentaire des nervures de maintien (20) et en retrait par rapport au bord adjacent du segment de bande.

8. Dispositif de protection selon la revendication 7, caractérisé en ce que les nervures de maintien (20) sont à une distance (d) du fond de la gorge inférieure à la distance (D) des nervures de verrouillage (21) par rapport au bord adjacent.

9. Dispositif de protection selon l'une des revendications 1 à 8, caractérisé en ce que la résistance électrique comporte deux fils (9) ayant des premières extrémités équipées de cosses (10) électriquement séparées et des secondes extrémités électriquement reliées entre elles par un organe conducteur (16).

10. Dispositif de protection selon l'une des revendications 1 à 9, caractérisé en ce que le segment de bande (4) est préformé de façon que les bords (14) devant être associés par l'organe de liaison (8) soient rappelés l'un vers l'autre de façon élastique.

## Patentansprüche

1. Vorrichtung zum Schutz einer Kabelverbindung durch die Anbringung eines rohrförmigen, wärmeverformbaren Elements, das ein Bandsegment (4) aus wärmeschmelzbarem Material, ein Verbindungselement (8, 18) für die Ränder des Bandsegments und zumindest einen länglichen elektrischen Widerstand (9) umfaßt, der so angeordnet ist, daß er sich in der Nähe zumindest eines Randes (14) des Bandsegments erstreckt, dadurch gekennzeichnet, daß das Verbindungselement zumindest eine Nut oder eine Kerbe (19) zum Halten zumindest eines Randes (14) des Bandsegments hat.

2. Schutzvorrichtung nach Anspruch 1, dadurch gekennzeichnet, daß das Verbindungselement für die Ränder des Bandsegments eine Klemmleiste (8) umfaßt, in der sich ein elektrischer Widerstand (9) in Längsrichtung erstreckt und zumindest an einem Ende der Klemmleiste heraustritt.

3. Schutzvorrichtung nach Anspruch 2, dadurch gekennzeichnet, daß die Klemmleiste (8) einen H-förmigen Querschnitt hat und Halterippen (17) aufweist, die dem Inneren der Nuten zugekehrt sind.

4. Schutzvorrichtung nach Anspruch 1, dadurch gekennzeichnet, daß das Verbindungselement Haltelippen (18) umfaßt, die mit einem Rand (14) des Bandsegements (4) fest verbunden sind und sich entlang dieses Randes vorspringend erstrecken, um eine Nut (19) für den Eingriff eines gegenüberliegenden Randes des Bandsegments zu begrenzen.

5. Schutzvorrichtung nach Anspruch 4, dadurch gekennzeichnet, daß der elektrische Widerstand zumindest einen dem Boden der Nut (19) benachbarten elektrischen Draht umfaßt.

6. Schutzvorrichtung nach Anspruch 4 oder 5, dadurch gekennzeichnet, daß die Lippen (18) Halterippen (20) haben, die dem Inneren der Nut (19) zugekehrt sind.

7. Schutzvorrichtung nach Anspruch 6, dadurch gekennzeichnet, daß der Rand des den Haltelippen (18) gegenüberliegenden Bandsegments Verriegelungsrippen (21) mit einem sich mit den Halterippen (20) ergänzenden und in bezug auf den benachbarten Rand des Bandsegments zurückweichenden Profil hat.

8. Schutzvorrichtung nach Anspruch 7, dadurch gekennzeichnet, daß die Halterippen (20) zu dem Boden der Nut einen Abstand (d) aufweisen, der kleiner ist als der Abstand (D) der Verriegelungsrippen (21) zum benachbarten Rand.

9. Schutzvorrichtung nach einem der Ansprüche 1 bis 8, dadurch gekennzeichnet, daß der elektrische Widerstand zwei Drähte (9) umfaßt, die an ihrem jeweiligen ersten Ende elektrisch getrennte Kabelschuhe (10) haben und die an ihrem jeweiligen zweiten Ende untereinander durch ein leitendes Element (16) verbunden sind.

10. Schutzvorrichtung nach einem der Ansprüche 1 bis 9, dadurch gekennzeichnet, daß das Bandsegment (4) derart ausgebildet ist, daß die durch das Verbindungselement (8) miteinander zu verbindenden Ränder (14) einander elastisch zugestellt werden.

## Claims

1. Device for protecting a cable connection through installation of a heat deformable tubular member comprising a heat fusible strip segment (4), a binding member (8, 18) of the edges of the strip segment, and at least one elongated electric resistor (9) arranged for laying close to at least one edge (14) of the strip segment, characterized in that the binding member comprises at least one slot or groove (19) arranged for achieving a holding of at least one edge (14) of the strip segment.

2. A protecting device according to claim 1 characterized in that the binding member of the edges of the strip segment comprises a stick (8) in which an electric resistor (9) longitudinally lays and emerges at least at one end of the stick.

3. A protecting device according to claim 2, characterized in that the stick (8) shows a "H" profile and has holding ribs (17) turned to the inside of the slots.

4. A protecting device according to claim 1, characterized in that the binding member comprises holding lips (18) integral with an edge (14) of the strip segment (4) and protruding along this edge for defining a groove (19) for engaging an opposed edge of the strip segment.

5. A protecting device according to claim 4, characterized in that the electric resistor (9) comprises at least one electric wire adjacent to the groove bottom (19).

6. A protecting device according to claim 4 or claim 5, characterized in that the lips (18) comprise holding ribs (20) turned to the inside of the groove (19).

7. A protecting device according to claim 6, characterized in that the edge of the strip segment opposed to the holding ribs (20) comprises locking ribs (21) having a profile complementary to the holding ribs (20) and set back from the adjacent edge of the strip segment.

8. A protecting device according to claim 7, characterized in that the holding ribs (20) are at a distance (d) from the groove bottom which is inferior to the distance (D) of the locking ribs (21) to the adjacent edge.

9. A protecting device according to any one of claims 1 to 8, characterized in that the electric resistor comprises two wires (9) having first ends provided with electrically separated lugs (10) and second ends electrically connected to each other by means of a conducting member (16).

10. A protecting device according to any one of claims 1 to 9, characterized in that the strip segment (4) is preformed whereby the edges (14) which are intended to be associated by the binding member (8) resiliently return one towards the other.
